# EUROPÄISCHE PATENTSCHRIFT

(11) **EP 0 340 274 B1**
(45) Veröffentlichungstag und Bekanntmachung des Hinweises auf die Patenterteilung: **20.04.1994**
(21) Anmeldenummer: 88909743.2
(22) Anmeldetag: 12.11.1988
(51) Int. Cl.: B01D 15/08, G01N 30/56

(54) **VORRICHTUNG ZUR PRÄPARATIVEN FLÜSSIGKEITSCHROMATOGRAFIE BZW. ADSORPTION**
DEVICE FOR PREPARATIVE LIQUID CHROMATOGRAPHY OR ADSORPTION
DISPOSITIF DE CHROMATOGRAPHIE OU D'ADSORPTION LIQUIDES PREPARATIVES

(30) Priorität: 13.11.1987 DE 3738691
(43) Veröffentlichungstag der Anmeldung: 08.11.1989
(73) Patentinhaber: Chmiel, Horst Prof. Dr.-Ing., D-71229 Leonberg (DE)
(72) Erfinder: Chmiel, Horst Prof. Dr.-Ing., D-71229 Leonberg (DE)
(74) Vertreter: Münich, Wilhelm, Dr.
(86) Internationale Anmeldenummer: DE8800704
(87) Internationale Veröffentlichungsnummer: WO8904202

(56) Entgegenhaltungen:
- EP-A- 0 234 471
- WO-A-85/00020
- DE-A- 2 551 923
- DE-A- 2 722 025

## Beschreibung

### Technisches Gebiet

Die Erfindung bezieht sich auf eine Vorrichtung zur präparativen Flüssigkeitschromatografie bzw. Adsorption gemäß dem Oberbegriff des Anspruchs 1.

### Stand der Technik

Die Kosten biotechnischer Produkte werden zu 60 bis 95 % von der Produktaufarbeitung bzw. Produktreinigung bestimmt. Besonders häufig verwendete Reinigungsverfahren sind Chromatografie bzw. Adsorption. Hier nutzt man den Effekt, daß verschiedene Komponenten einer Lösung, wenn sie ein Festbett passieren, mit der Oberfläche der Feststoffpartikeln verschieden stark interagieren. Bei bisherigen Verfahren sind die Feststoffpartikeln in eine Säule gefüllt.

Die Ausrüstung der Oberfläche der Feststoffpartikeln - stationäre Phase genannt - bestimmt zusammen mit der daran vorbeiströmenden Flüssigkeit - mobile Phase genannt - das spezifische, chromatische bzw. adsorptive Trennverfahren.

Die Kapazität einer solchen chromatografischen Trennsäule bzw Adsorbersäule ergibt sich aus der Zahl der aktiven Stellen pro Flächeneinheit multipliziert mit der insgesamt verfügbaren Fläche. Ist die Kapazität erschöpft, d. h. sind alle aktiven Stellen besetzt, muß die Säule regeneriert werden. Dabei werden die Umgebungsbedingungen (pH, Temperatur, Polarität etc.) geändert und mit einer Spüllösung das Produkt ausgewaschen.

Dieser Zyklus kann so oft wiederholt werden, bis die aktiven Stellen sich nicht mehr regenerieren lassen. Der Säuleninhalt muß dann verworfen, die Säule mit frischer stationärer Phase gefüllt werden. Damit dieser Zyklus nicht zu oft wiederholt werden muß, ist eine ausreichende Menge an Säulenfüllmaterial (auch Packungsmaterial genannt) erforderlich. Um eine gleichmäßige Durchströmung des Festbettes zu erreichen, darf der Säulendurchmesser nicht zu groß sein. Mit zunehmender Säulenhöhe steigt aber der Strömungswiderstand an, so daß hohe Drücke erforderlich sind, um wirtschaftliche Flüsse zu erzeugen.

Die meisten chromatografischen Füllmaterialien bestehen aus Kunststoffpartikeln (meist Kugeln mit einem Durchmesser im µm-Bereich), die bei hohen Drücken deformiert werden, so daß der Strömungswiderstand weiter ansteigt.

Eine Vorrichtung zur präparativen Flüssigkeitschromatografie gemäß dem Oberbegriff des Anspruchs 1 ist aus der DE-A-27 22 025 bekannt. Bei dieser bekannten Vorrichtung ist das Chromatografie-Material zwischen zwei flächigen Elementen eingeschlossen und wird in etwa senkrecht zu den flächigen Elementen durchströmt. Beim Anlegen großer Drücke ist es jedoch möglich, daß das Chromatografie-Material zerstört wird.

### Darstellung der Erfindung

Der Erfindung liegt die Aufgabe zugrunde, eine Vorrichtung zur präparativen Flüssigkeitschromatografie bzw. Adsorption derart weiterzubilden, daß ohne Beschädigung der Feststoffpartikel hohe Drücke angelegt und/oder große Säulenhöhen verwendet werden können.

Eine erfindungsgemäße Lösung dieser Aufgabe ist mit ihren Weiterbildungen in den Patentansprüchen gekennzeichnet:
Erfindungsgemäß sind die flächigen Elemente Porenmembrane oder feinmaschige Gewebe sind. Das als Chromatografie-Material verwendete Adsorber-Material ist in einem Stützgewebe fixiert, das mit den Porenmembranen bzw. dem feinmaschigen Gewebe ein dreischichtiges, flächiges System bildet, wobei das Stützgewebe derart ausgebildet ist, daß das Adsorber-Material weder durch sein Eigengewicht noch durch von außen angelegte Drücke beschädigt wird. Hierdurch wird zum einen erreicht, daß die feste Phase weder durch ihr Eigengewicht noch durch von außen angelegte Drücke beschädigt wird, zum anderen ist eine leichte Handhabbarkeit gewährleistet.

Weiterbildungen der Erfindung sind in den Unteransprüchen gekennzeichnet:
Insbesondere kann das flächige System in mehreren Schichten aufgewickelt sein, so daß die Gesamtabmessungen des Systems praktikabel sind.

Durch Abstandhalter, die wenigstens ein zwischen den Schichten vorgesehenes weiteres Stützgewebe bildet, wird eine über die ganze Fläche gleichmäßige Flüssigkeitszu- und abfuhr erreicht.

Dabei ist es besonders bevorzugt, wenn zwei Stützgewebe als Abstandshalter vorgesehen sind.

Bei einer Weiterbildung, gemäß der das Stützgerüst einen Eintritts- und einen Austrittsstutzen zur Befüllung bzw. Entleerung mit Chromatografie- bzw. Adsorber-Material hat, wird ein kompaktes Modul geschaffen, das, ohne daß es zerlegt werden müßte, regenerierbar ist.

Weiterhin ist es möglich, das mit Chromatografie- bzw. Adsorber-Material gefüllte und beidseits mit einem Gewebe verschlossenen Stützgewebe in eine Zentrifugentrommel einzulegen. Diese Ausführung ist besonders für kleine Durchsätze geeignet, bei der eine "Lage" in die Trommel eingelegt wird und die Zentrifugalkraft die Strömung durch das flächige System erzeugt.

Auch kann an das aus mehreren Schichten bestehende flächige System eine Druckdifferenz angelegt werden, die eine Strömung erzeugt, aus der das Chromatografie- bzw. Adsorbermaterial das Produkt aufnimmt.

In jedem Falle ist es bevorzugt, wenn die Strömungsrichtung umkehrbar ist, so daß das flächige System von einem Eluenten durchströmt und dadurch das Produkt vom Chromatografie- bzw. Adsorber-Material entfernt wird.

### Kurze Beschreibung der Zeichnung

Die Erfindung wird nachstehend anhand von Ausführungsbeispielen unter Bezugnahme auf die Zeichnung näher beschrieben, in der zeigen:
- Fig. 1: den prinzipiellen Aufbau einer erfindungsgemäßen Vorrichtung,
- Fig. 2: eine erfindungsgemäß aufgewickelte Vorrichtung, und
- Fig. 3: den Eintritts- und Austrittsstutzen.

### Beschreibung von Ausführungsbeispielen

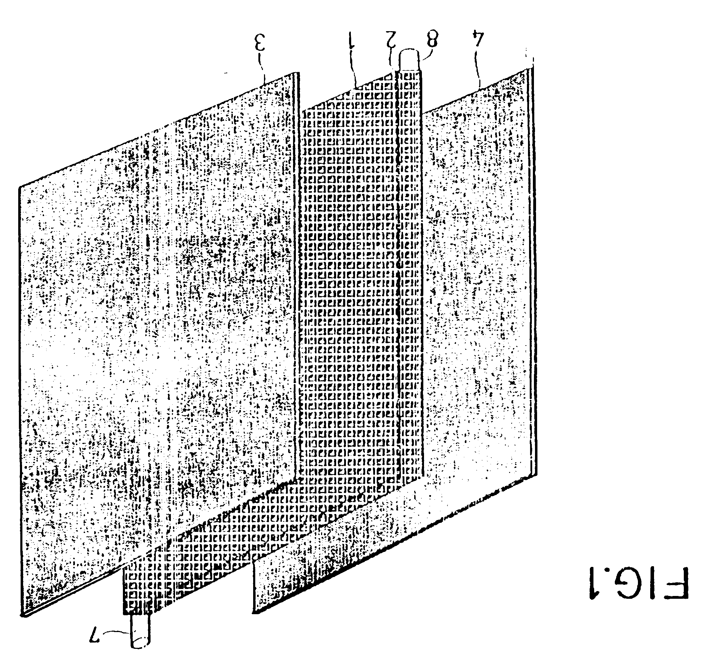

Fig. 1 zeigt eine erfindungsgemäße Vorrichtung. Das Säulenfüllmaterial 1 (Chromatografie- oder Adsorbermaterial) ist in einem Stützgewebe 2 fixiert, das eine Dicke von nur wenigen Millimetern besitzt und von beiden Seiten mit einer Porenmembran bzw. einem feinmaschigen Gewebe 3 und 4 verschlossen ist. Die Porenweite der Membran bzw. Maschenweite des feinmaschigen Gewebes sind so ausgewählt, daß auch die feinsten Partikeln des Packungsmaterials nicht hindurchtreten können.

Bei Verwendung einer Membran anstelle einem feinmaschigen Gewebe ergibt sich durch Wahl einer geeigneten Porenweite (z. B. 0,2 µm) der weitere Vorteil, daß ein generelles Problem der Chromatografie, nämlich der mikrobielle Befall durch eingeschleußte Keime, vermieden wird. Der einmal sterilisierte Modul bleibt dann während des Betriebs steril, da die Membranen die hindurchtretenden Flüssigkeiten steril filtrieren. Das dreischichtige, flächenhafte Gebilde wird senkrecht durchströmt, so daß der Druckverlust äußerst gering ist. Die Strömungsgeschwindigkeit kann über den Druck sehr genau eingestellt werden. Die erforderliche Kapazität, d.h. das notwendige Füllvolumen an Packungsmaterial, wird durch geeignete Wahl der Flächengröße erreicht.

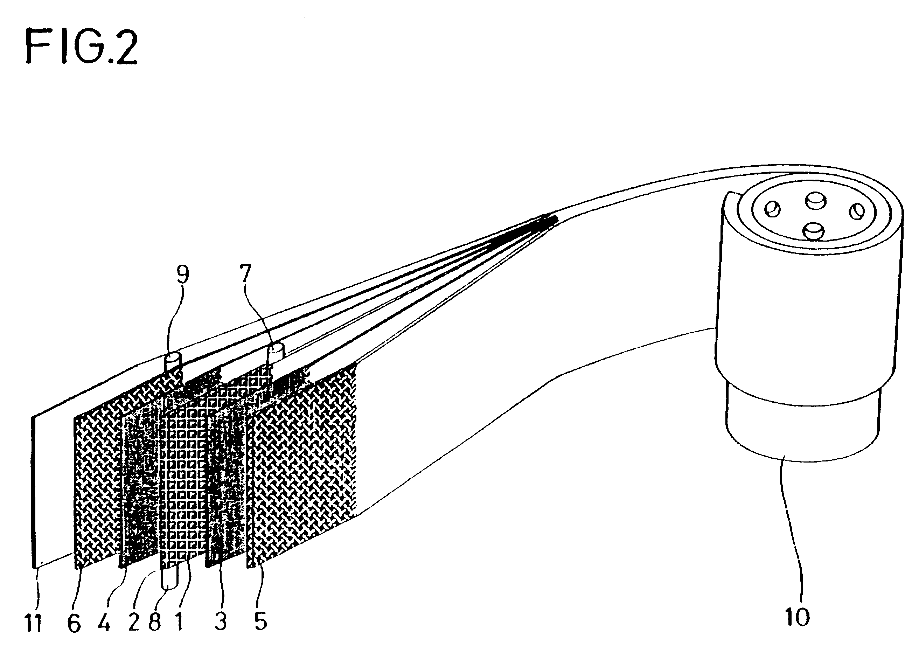

Fig. 2 zeigt eine Weiterbildung der in Fig. 1 gezeigten Vorrichtung, bei der die Gesamtabmessungen der Vorrichtung dadurch praktikabel gehalten werden, daß man das flächige Gebilde aufwickelt. Hierzu sind ein oder zwei weitere Stützgewebe 5 und 6 als Abstandhalter und eine flüssigkeitsdichte Folie 11 erforderlich.

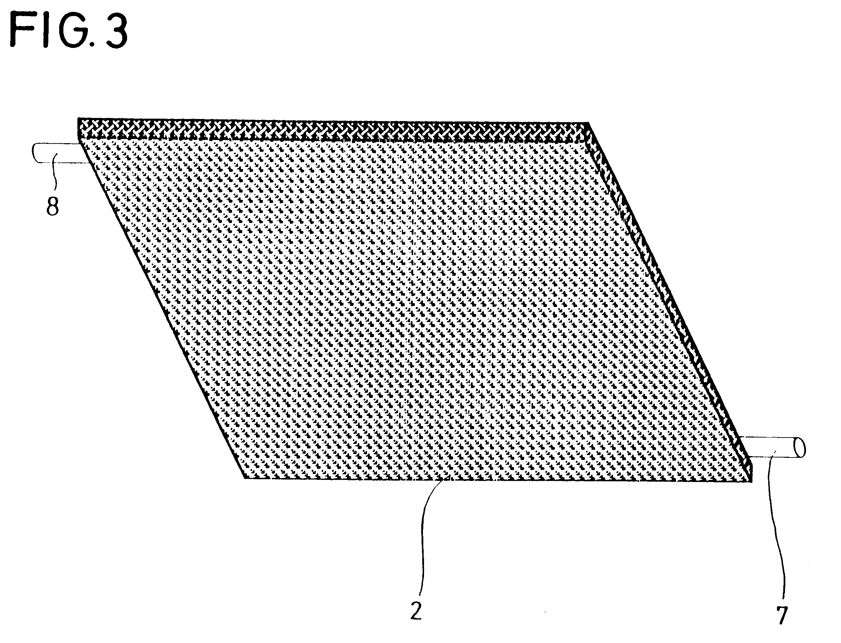

Der aus diesen Elementen in der in Fig. 2 dargestellten Weise gebildete Wickelmodul hat beispielsweise vier Anschlüsse: Einen Füllstutzen 8 zum Stützgewebe 2, über den die Befüllung eines Moduls mit dem Packungsmaterial (stationäre Phase) erfolgt, einen Entleerungsstutzen 7, über den das verbrauchte Packungsmaterial entfernt wird. Der Befüllungs- und Entleerungsvorgang des Packungsmaterials wird beträchtlich dadurch erleichtert, daß das Stützgewebe 2 eine Kanalstruktur mit Vorzugsrichtung besitzt; dies zeigt Fig. 3.

Das zu trennende Gemisch tritt über den Eintrittsstutzen 10 in den Modul, der gleichzeitig als Wickelrohr dient. Das vom Produkt befreite Fluid verläßt den Modul über den Austrittsstutzen 9. Der Eluent, d.h. dasjenige Fluid, das die Umgebungsbedingungen des Trägermaterials nach Abschluß der Beladungsphase so ändert, daß dieses das zuvor aufgenommene Produkt wieder freigibt, tritt nach einer Ventilumschaltung über den Stutzen 9 ein und verläßt den Modul - gemeinsam mit dem Produkt - über den Stutzen 10.

Während der Reinigungsphase, die nach einem oder mehreren Zyklen erfolgt, kann die Reinigungsflüssigkeit über den Stutzen 9 ein- und über die Stutzen 8 und 10 austreten, wodurch eventuell Ablagerungen auf 3 und 4 abgespült werden.

Besondere Sorgfalt muß den oberen und unteren Abdichtungskanten des Wickelmoduls gewidmet werden, die die einzelnen Schichten gegeneinander abdichten und teilweise gleichzeitig als Flüssigkeitskanäle dienen. Diese sorgen für eine gleichmäßige Flüssigkeitsverteilung.

Müssen nur kleinere Flüssigkeitsmengen aufgearbeitet werden, kann das flächige Gebilde der Figur 1 auch in eine Zentrifuge eingelegt werden, derart, daß das Gewebe 4 an der Innenwand der Zentrifugentrommel anliegt, und über das Gewebe 3 (bzw. Membran) das aufzuarbeitende Flüssigkeitsgemisch zugeführt wird. Unter der Zentrifugalkraft strömt die Flüssigkeit vom Gewebe 3 durch das Gewebe bzw. das Stützgerüst 2. Die vom Produkt befreite Flüssigkeit verläßt die Zentrifuge dann über das Gewebe 4, das in diesem Fall ein Gewebe sein sollte, das den Flüssigkeitsablauf entlang der Zentrifugentrommel gestattet.

Ist das Trägermaterial beladen, wird die Flüssigkeitszufuhr umgeschaltet. Nun tritt der Eluent über das Gewebe bzw. die Membran 3 in das Gewebe bzw. die Membran 2, ändert dort die Umgebungsbedingungen derart, daß das Produkt sich vom Säuelnfüllmaterial 1 löst und verläßt über die Schicht 4 mit dem Produkt die Zentrifuge.

### Gewerbliche Anwendbarkeit

Die erfindungsgemäße Vorrichtung kann in der Biotechnologie zu den verschiedensten Produktaufarbeitungen bzw. Produktreinigungen eingesetzt werden. Dabei richtet sich die Auswahl des Säulenfüllmaterials und der einzelnen Gewebe bzw. Membranen nach dem aufzuarbeitenden bzw. reinigenden Produkt. Diese Auswahl kann ein auf dem einschlägigen Gebiet tätiger Fachmann jederzeit aufgrund der vorstehenden Beschreibung treffen.

## Patentansprüche

1. Vorrichtung zur präparativen Flüssigkeitschromatografie, bei der das Chromatografie-Material zwischen zwei flächigen Elementen eingeschlossen ist, und in etwa senkrecht zu den flächigen Elementen durchströmt wird,
dadurch **gekennzeichnet**, daß die flächigen Elemente Porenmembrane oder feinmaschige Gewebe sind, und
daß das als Chromatografie-Material verwendete Adsorber-Material in einem Stützgewebe fixiert ist, das mit den Porenmembranen bzw. dem feinmaschigen Gewebe ein dreischichtiges, flächiges System bildet, wobei das Stützgewebe derart ausgebildet ist, daß das Adsorber-Material weder durch sein Eigengewicht noch durch von außen angelegte Drücke beschädigt wird.

2. Vorrichtung nach Anspruch 1,
dadurch **gekennzeichnet**, daß das Stützgerüst einen Eintritts- und einen Austrittsstutzen zur Befüllung bzw. Entleerung mit Chromatografie- bzw. Adsorber-Material hat.

3. Vorrichtung nach Anspruch 1 oder 2,
dadurch **gekennzeichnet**, daß die Strömungsrichtung umkehrbar ist, so daß das flächige System von einem Eluenten durchströmt und dadurch das Produkt vom Chromatografie- bzw. Adsorber-Material entfernt wird.

4. Vorrichtung nach einem der Ansprüche 1 bis 3,
dadurch **gekennzeichnet**, daß das Stützgewebe Kanäle aufweist, mittels derer das Adsorber-Material ein- bzw. ausgebracht werden kann.

5. Vorrichtung nach einem der Ansprüche 1 bis 4,
dadurch **gekennzeichnet**, daß das mit Chromatografie- bzw. Adsorber-Material gefüllte und beidseits mit einem Gewebe verschlossenen Stützgewebe in einer Zentrifugentrommel eingelegt ist.

6. Vorrichtung nach einem der Ansprüche 1 bis 5,
dadurch **gekennzeichnet**, daß die Elution im Gleichstrom ausgeführt wird.

7. Vorrichtung zur präparativen Flüssigkeitschromatografie, bei dem das in Ansprüchen 1 bis 7 gekennzeichnete dreischichtige flächige System auf beiden Seiten mit einem weiteren Stützgewebe als Abstandshalter und auf eine Seite zusätzlich mit einer flüssigkeitsdichten Folie versehen und zu einem Wickelmodul aufgewickelt ist.

## Claims

1. Device for preparative liquid chromatography, wherein the chromatographic material is enclosed between two surface elements and through which the flow passes approximately orthogonally relative to said surface elements,
**characterized in** that the adsorber material used as chromatographic material is fixed in a supporting tissue cooperating with the porous membranes or the fine-mesh tissue to form a triple-layer surface system, with said supporting tissue being so configured that said adsorber material will not be damaged, neither by its own weight nor by pressures applied from the outside.

2. Device according to Claim 1,
**characterized** in that the supporting frame presents one inlet port and one outlet port for charging or discharging of said chromatographic or adsorber material, respectively.

3. Device according to Claim 1 or 2,
**characterized** in that the flow direction may be reversed such that eluent passes through said surface system for removal of the product from said chromatographic or adsorber material, respectively.

4. Device according to any of Claims 1 to 3,
**characterized** in that said supporting tissue comprises ducts which may be used to charge or discharge said adsorber material.

5. Device according to any of Claims 1 to 4,
**characterized** in that said supporting tissue, having been charged with said chromatographic or adsorber material, respectively, and closed on both sides by a tissue, is placed into a centrifuge drum.

6. Device according to any of Claims 1 to 5,
**characterized** in that the elution is carried out in a co-current operation.

7. Device for preparative liquid chromatography, wherein the said triple-layer surface system characterized in Claims 1 to 7 is provided on both sides with another supporting tissue as spacer and on one side additionally with a liquid-tight sheet, and is reeled up so as to form a wound module.

## Revendications

1. Dispositif de chromatographie liquide préparative, dans lequel la matière chromatographique est renfermée entre deux éléments plans, par lequel s'écoule le courant environ à angle droit relativement auxdits éléments plans,
**caractérisé en** ce que ladite matière absorbante qui est utilisée comme matière chromatographique est fixée dans un tissu support qui co-opère avec des membranes poreuses ou le tissu à mailles fines afin de former un système plan à trois couches, ledit tissu support étant configuré de façon à éviter toute détérioration de ladite matière adsorbante, soit par son poids propre ou par des pressions appliquées de l'extérieur.

2. Dispositif selon la revendication 1,
**caractérisé** en en ce que la structure support présente une tubulure d'alimentation et une tubulure de décharge pour le chargement ou l'évacuation de ladite matière chromatographique ou respectivement adsorbante.

3. Dispositif selon la revendication 1 ou 2,
**caractérisé** en ce que le sens d'écoulement est réversible de façon qu''un éluant passe à travers ledit système plan afin d'enlever le produit de ladite matière chromatographique ou respectivement adsorbante.

4. Dispositif selon une quelconque des revendications 1 à 3,
**caractérisé** en ce que ledit tissu support comprend des passage appropriés au chargement ou à l'évacuation de ladite matière adsorbante.

5. Dispositif selon une quelconque des revendications 1 à 4,
**caractérisé** en ce que ledit tissu support, chargé de ladite matière chromatographique ou respectivement adsorbante et fermé, de ses deux côtés, par un tissu, est placé dans un tambour de centrifuge.

6. Dispositif selon une quelconque des revendications 1 à 5,
**caractérisé** en ce que l'élution est réalisée par une opération à courant de même sens.

7. Dispositif de chromatographie liquide préparative, dans lequel ledit système plan à trois couche caractérisé dans les revendications 1 à 7 est prévu sur les deux côtés, d'un autre tissu support servant en tant qu'écarteur, et de plus, sur un côté, d'une feuille étanche aux liquides, et en ce qu'il est enroulé pour former un module bobiné.
